# EUROPEAN PATENT SPECIFICATION

(11) **EP 3 184 297 B1**
(45) Date of publication and mention of the grant of the patent: **08.11.2017**
(21) Application number: 16188257.6
(22) Date of filing: 12.09.2016
(51) Int. Cl.: B65D 30/08, B65D 30/24, B32B 27/10, B32B 29/06, D21H 27/10, D21H 27/30, D21H 27/32, D21H 27/34, D21H 27/36, B32B 27/32, B32B 7/04, B65D 65/38, B32B 3/02

(54) **RAIN RESISTANT SACK PAPER**
REGENBESTÄNDIGES SACKPAPIER
PAPIER D'ENSACHAGE RÉSISTANT À LA PLUIE

(30) Priority: 21.12.2015 EP 15201666
(43) Date of publication of application: 28.06.2017
(73) Proprietor: BillerudKorsnäs AB, 169 27 Solna (SE)
(72) Inventor: Lindström, Ove, SE-952 42 Kalix (SE)
(74) Representative: Kransell & Wennborg KB

(56) References cited:
- EP-A1- 2 388 203
- WO-A1-99/02772

## Description

### TECHNICAL FIELD

The present disclosure relates to a sack paper that can be used in a rain resistant sack suitable for a hydraulic binder, such as cement.

### BACKGROUND

During filling and storage of powdery material, such as cement, paper sacks are required to meet high standards.

Firstly, the paper sacks need to hold a considerable material weight, i.e. have high tensile strength. For this purpose, Kraft paper is a suitable sack wall material. The sacks typically have two or more walls, i.e. layers of paper material, to further strengthen the sack construction. A wall layer of a sack is often referred to as a ply. Production of ply material (i.e. sack paper) is for example disclosed in WO 99/02772.

Secondly, a material such as cement is sensitive to moisture contamination during storage. Hence, cement sacks often require a protection against atmospheric water vapor penetration through the sack plies. Such protection is often achieved by a moisture barrier incorporated as an intermediate layer in the sack, i.e. between two plies of the paper material. The moisture barrier is typically a plastic film ("free film"), e.g. of polyethylene (PE), that is impermeable to water. The free film may also improve resistance to grease and prevent contamination by microorganisms.

Thirdly, the paper sack should vent air during filling. In detail, the air that accompanies the powdered material shall efficiently vent from the sack as the filling machines that delivers the material run at high throughput rates. Often, the venting capability of the sack is the actual limiting factor for the filling rate. Efficient venting also prevents air from being trapped in the sack. Such trapped air may otherwise cause under-weight packs, sack rupture and problems when sacks are stacked for transportation. The "venting" is also referred to as "deaeration".

During the filling process, the only way for air to escape from the interior of the sack has, in many sack constructions, been through the walls of the sack. Kraft paper of high porosity is often used in the walls to achieve air permeability. However, an increased porosity of the paper normally results in a decrease in the overall strength. In particular, the strength may be significantly reduced if holes must be made in the paper material to achieve sufficient air permeability. Furthermore, the use of a free film may reduce deaeration during filling, since most such films are impermeable to air. Therefore, the free film layer has been provided with slits or perforations to facilitate deaeration.

EP1657180 discloses a bag that has a polyethylene film that is impermeable to air and interposed between two paper folds. The film is folded to form a sleeve with two contactless edges spaced by an interval for permitting free passage of the air for deaeration during filling of the bag. The fold has a band impermeable to air to impose a path to the air such that air penetrates between the fold and the film and evacuates towards outside.

US2009148636 discloses a multilayer bag comprised of at least one outer and at least one inner paper layer and a synthetic layer located between an outer and an inner paper layer, characterized in that on the longitudinal side of the paper bag is provided an overlap of the outer paper web and a partial overlap of the synthetic web and the outer paper web is partially adhered to itself in the region of overlap.

US4132347 discloses a bag adapted to be packed with cement or the like by blowing it into the bag through a foldable blow-in port. It comprises an outer layer of synthetic resin which is impervious to air and moisture and an inner layer of paper bonded to the outer layer by a layer of bonding agent. The surface of the layer of the bonding agent facing the paper layer is provided with a plurality of longitudinal grooves which act as exhaust passages for discharging the air blown into the bag.

EP2388203 discloses a paper sack, in particular for fine-grained bulk material such as cement, gypsum, granulate, animal feed etc., comprising at least a front portion and a rear portion, wherein said portions delimit an interior volume, wherein the material forming said portions comprises a first layer and a second layer, wherein the first layer is formed of sack kraft paper and wherein the second layer is formed of recycled containerboard paper.

### SUMMARY

An object of the present disclosure is to provide a sack paper for a sack that can protect a water-sensitive content, such as a hydraulic binder, against rain and still meet other requirements of the sack industry. Examples of such other requirements are strength (to prevent rupture during handling), deaeration during filling (to allow high filling rates) and cost efficiency.

The following itemized listing presents various embodiments of the present disclosure.
1. A bleached Kraft paper for use in a sack, wherein:
   the grammage according to ISO 536 of said paper is 55-100 g/m², such as 60-90 g/m²;
   the brightness according to ISO 2470-1 of said paper is at least 78 %, such as at least 83 %;
   said paper comprises a urea formaldehyde wet strength agent;
   said paper has been sized with AKD and rosin size in a weight ratio between 1:5 and 1:2;
   the amount of hydrophobic size used for sizing the paper is 1.5-4 kg/ton paper, such as 2.0-3.5 kg/ton paper;
   the Gurley porosity according to ISO 5636-5 of said paper is at least 18 s, such as at least 22 s;
   the static friction coefficient according to Tappi T-815 of at least one side, such as both sides, of said paper is at least 0.5;
   and the Cobb 1800 s value measured according to ISO 535 of at least one side of said paper is less than 50 g/m², such as less than 45 g/m², such as less than 40 g/m².
2. The paper according to item 1, wherein the static friction coefficient is at least 0.53.
3. The multi-ply sack according to any one of the preceding items, wherein the Cobb 60 s value measured according to ISO 535 of at least one side the paper is less than 30 g/m², such as less than 25 g/m².
4. The paper according to any one of the preceding items, wherein the wet tensile strength in the machine direction according to ISO 3781 (soaking time = 10 min) of the paper is at least 1.2 kN/m, such as at least 1.6 kN/m.
5. The paper according to any one of the preceding items, wherein the paper is formed from a paper pulp comprising at least 50 dry weight % softwood pulp, such as at least 75 dry weight % softwood pulp, such as at least 90 dry weight % softwood pulp.
6. The paper to any one of the preceding items, wherein the tear strength according to ISO 1974 of the paper is at least 840 mN, such as at least 950 mN in the machine direction and in the cross direction.
7. A sack comprising a ply composed of paper according to any one of the preceding items.
8. A multi-ply sack comprising an inner paper ply, an outer paper ply composed of the paper according to any one of items 1-6 and a plastic film arranged between the inner paper ply and the outer paper ply, wherein the Gurley porosity according to ISO 5636-5 of the inner paper ply is less than 10 s, the plastic film provides an substantially uninterrupted barrier between the inner paper ply and the outer paper ply and the sack is configured to allow air to escape from an interspace between the inner paper ply and the plastic film through a top end of the sack during filling of the sack.
9. The multi-ply sack according to item 8, wherein the Gurley porosity according to ISO 5636-5 of the inner paper ply is less than 8 s, such as less than 7 s, such as less than 6 s.
10. The multi-ply sack according to any one of items 8-9, wherein the inner paper ply is unbleached.
11. The multi-ply sack according to any one of items 8-10, wherein the inner paper ply is a Kraft paper ply.
12. The multi-ply sack according to any one of items 8-11, wherein the inner ply is formed from a paper pulp comprising at least 50 dry weight % softwood pulp, such as at least 75 dry weight % softwood pulp, such as at least 90 dry weight % softwood pulp.
13. The multi-ply sack according to any one of items 8-12, wherein the grammage according to ISO 536 of the inner ply is 50-140 g/m², such as 55-100 g/m², such as 60-90 g/m².
14. The multi-ply sack according to any one of items 8-13, wherein the tensile energy absorption according to ISO 1924-3 of the inner ply is at least 175 J/m² in the machine direction and at least 182 J/m² in the cross direction.
15. The multi-ply sack according to any one of items 8-14, wherein the tensile energy absorption according to ISO 1924-3 of the inner ply is at least 196 J/m² in the machine direction and at least 203 J/m² in the cross direction.
16. The multi-ply sack according to any one of items 8-15, wherein the tensile energy absorption index according to ISO 1924-3 of the inner ply is at least 2.5 J/g in the machine direction and at least 2.6 J/g in the cross direction.
17. The multi-ply sack according to any one of items 8-16, wherein thickness of the plastic film is 8-25 µm, such as 12-22 µm.
18. The multi-ply sack according to any one of items 8-17, wherein the plastic film is composed of polyethylene (PE), such as high-density polyethylene (HDPE).
19. The multi-ply sack according to any one of items 8-18, wherein the sack is filled with contents and has a volume 8-45 liters, such as 12-45 liters.
20. The multi-ply sack according to any one of items 8-19, wherein the sack is filled with a hydraulic binder.
21. The multi-ply sack according to item 20, wherein the amount of hydraulic binder is 20-60 kg.
22. The multi-ply sack according to any one of items 8-21, wherein the sack is a valve sack.

### BRIEF DESCRIPTION OF THE DRAWINGS

Fig 1 shows a sack configured to allow "top deaeration".
Fig 2 shows the sack of Fig 1 provided with a top patch for reinforcement.
Fig 3 shows deaeration graphs for two sacks according to the present disclosure (Sack 1 and Sack 2) and a reference sack. The y axis represents the normalized MegaGurley flow and the x axis represents the pressure drop.

### DETAILED DESCRIPTION

There is thus provided a bleached Kraft paper for use in a sack, wherein:
the grammage according to ISO 536 of said paper is 55-100 g/m², such as 60-90 g/m²;
the brightness according to ISO 2470-1 of said paper is at least 78 %, such as at least 83 %;
said paper comprises a urea formaldehyde wet strength agent;
said paper has been sized with AKD and rosin size in a weight ratio between 1:5 and 1:2;
the amount of hydrophobic size used for sizing the paper is 1.5-4 kg/ton paper, such as 2.0-3.5 kg/ton paper;
the Gurley porosity according to ISO 5636-5 of said paper is at least 18 s, such as at least 22 s;
the static friction coefficient of at least one side, such as both sides, of said paper is at least 0.5; and
the Cobb 1800 s value measured according to ISO 535 of at least one side of said paper is less than 50 g/m², such as less than 45 g/m².

Bleached paper is generally significantly less hydrophobic than unbleached paper. Accordingly, bleached/white sack paper has higher water absorptiveness and is more sensitive to rain. Therefore, it is more challenging to develop a rain resistant sack having a bleached outer paper ply than a rain resistant sack having an unbleached outer paper ply. Still, sacks having white outer plies are demanded on the marked, also for sacks that may be exposed to rain. The concept of the present disclosure is thus particularly beneficial when the paper is bleached. The brightness of the paper may for example be at least 78 % or at least 80 % according to ISO 2470-1. Preferably, it is at least 83 %.

The paper is sized with hydrophobic size. The total added amount of hydrophobic size may for example be 1.5-4.0 kg/ton paper, such as 2.0-3.5 kg/ton paper. The sizing technique may be internal sizing, which means that the size is added in the wet end of the paper machine, or surface sizing, which means that the size is applied to the paper surface after initial drying. Examples of hydrophobic sizes are alkylketene dimer (AKD), alkenylsuccinic anhydride (ASA) and rosin size, which are all commercially available papermaking chemicals. The inventor has found that AKD and ASA reduce the water absorptiveness more efficiently than rosin size. On the other hand, larger amounts AKD or ASA may reduce the friction of the paper surface below desired levels. Further, the inventor has noted that the hydrophobicity of a paper sized with ASA may deteriorate after longer storage times due to sensitivity to oxygen and sunlight. Therefore, the inventor concludes that sizing with a combination of AKD and rosin size is preferred. The added amount of AKD may be 0.4-1.4 kg/ton paper and preferably 0.5-1 kg/ton paper. The added amount of rosin size may be 1.2-4.2 kg/ton paper and preferably 1.5-3 kg/ton paper. The weight ratio of AKD to rosin size may is between 1:5 and 1:2 and more preferably between 1:4 and 1:2.5.

In the context of the present disclosure, "kg/ton paper" refers to kg per ton of dried paper from the paper making process. Such dried paper normally has a dry matter content (w/w) of 90-95 %.

Sack paper normally has sufficient friction levels. As indicated above, certain sizing may however reduce the friction to a level that complicates handling and/or transport of the sacks. Preferably, the static friction coefficient according to Tappi T-815 of at least one side, such as both sides, of said paper is at least 0.5, such as at least 0.53. Such fiction coefficient may be obtained by using a combination of AKD and rosin according to the above.

If the friction is too low (e.g. below 0.5), a silicate solution can be printed on a surface, e.g. the surface that forms the outside of the outer paper ply in a sack.

Alum may also be added to the pulp in the production of the paper, e.g. in an amount of 0.5-5 kg/ton paper. The addition of alum is particularly beneficial when the hydrophobic size comprises rosin size. Alum refers to hydrated potassium aluminium sulphate (potassium alum).

Cobb value represents the amount of water absorbed by a paper surface in a given time. Consequently, the hydrophobic sizing reduces the Cobb value of the paper. Two examples of Cobb values are Cobb 60 s and Cobb 1800 s, wherein the absorption of water is measured after 60 seconds and 1800 seconds (30 minutes), respectively.

Rain typically means long-term exposure to rain and therefore, the Cobb 1800 s of the side that will be the outside of the outer paper ply in a sack is considered to be particularly relevant.

The Cobb 1800 s value measured according to ISO 535 of at least one side of the paper may for example be less than 60 g/m². Preferably it is less than 50 g/m² and more preferably less than 45 g/m² or less than 40 g/m². A typical lower limit for the Cobb 60 s value may be 25 or 30 g/m². A preferred range for the Cobb 1800 s value is thus 25-50 g/m².

The Cobb 60 s value measured according to ISO 535 of at least one side of the paper may for example be less than 30 g/m². Preferably it is less than 25 g/m². A typical lower limit for the Cobb 60 s value may be 10 or 15 g/m². A preferred range for the Cobb 60 s value is thus 15-25 g/m².

The sizing merely reduces water absorption. It does not completely prevent it. Therefore, the paper will be wet after a longer exposure to rain. To better contribute to the total strength of the sack when wet, the paper may therefore comprise a wet-strength agent, such as melamine-formaldehyde (MF) or, preferably, urea-formaldehyde (UF). The added amount of the wet-strength agent, such as UF, may be 5-30 kg/ton paper, such as 10-20 kg/ton paper.

The wet tensile strength in the MD according to ISO 3781 (soaking time = 10 min) of the paper may for example be at least 1.2 kN/m. Preferably, it is at least 1.6 kN/m.

Normally, high porosity (to facilitate deaeration) is a desired for sack paper. For the paper of the present disclosure, this is however not the case. Instead, low porosity may be desired as it is generally associated with low water absorptiveness.

The porosity of a paper can be quantified by the Gurley method, which measures the amount of time it takes for a certain amount of air to pass through a certain area of the paper. A low Gurley value thus means a highly porous paper. While many sack papers have a Gurley porosity below 10 seconds (s), the Gurley porosity of the paper of the present disclosure may be above 15 s or even above 18 or 22 s.

The Gurley porosities of the present disclosure are measured according to ISO 5636-5.

To provide strength, the paper is preferably a Kraft paper ply, which means that is formed from a pulp prepared according to the Kraft process. For the same reason, the starting material used for preparing the pulp that is used for forming the paper can comprise softwood (which has long fibers and that forms a strong paper). Accordingly, the paper is preferably formed from a paper pulp comprising at least 50 % softwood pulp, preferably at least 75 % softwood pulp and more preferably at least 90 % softwood pulp. The percentages are based of the dry weight of the pulp.

A sack paper normally has a grammage according to ISO 536 of 50-140 g/m². A sack paper of a higher grammage is stronger, but also more expensive. For the paper of the present disclosure, the grammage is preferably 55-100 g/m² and more preferably 60-90 g/m².

The tensile strength is the maximum force that a paper will withstand before breaking. In the standard test ISO 1924-3, a stripe having a width of 15 mm and a length of 100 mm is used with a constant rate of elongation. The tensile strength is one parameter in the measurement of the tensile energy absorption (TEA). In the same test, the tensile strength, the stretchability and the TEA value are obtained.

TEA is sometimes considered to be the paper property that best represents the relevant strength of the paper sack wall. This is supported by the correlation between TEA and drop tests. When a sack is dropped, the filling goods move inside the sack when it hits the floor. This movement means a strain on the sack wall. To withstand the strain, the TEA should be high, which means that a combination of high tensile strength and good stretch in the paper will then absorb the energy.

The stretchability according to ISO 1924-3 of the paper may for example be 4.5-10 % in the machine direction (MD) and 5.5-11 % in the cross direction. To obtain a high stretchability in the MD, the paper may be creped.

For example, the paper may be creped by a Clupak or Expanda unit. The skilled person knows how to adjust such a unit to obtain a desired stretchability in the MD.

The TEA index is the TEA value divided by the grammage. The TEA according to ISO 1924-3 of the paper may for example be 150-300 J/m² in both CD and MD. The TEA index according to ISO 1924-3 of the paper may for example be 2.2-3.5 J/g in the MD and 2.8-4.2 J/g in the CD.

The tear strength according to ISO 1974 of the paper may for example be at least 840 mN, such as at least 950 mN in both the machine direction (MD) and in the cross direction (CD). In one embodiment, the tear strength is at least 860 mN in MD and at least 1000 mN in CD.

To obtain satisfactory strength, the paper may comprise starch. If the paper comprises a wet strength agent, which also provides dry strength, a lower amount of starch can be preferred. For example, the added amount of starch may be 0-6 kg/ton paper, such as 0.5-4 kg/ton paper, such as 0.5-3 kg/ton paper. The starch may for example be a cationic starch or a mixture of cationic and anionic starch.

The paper described above may for example form the outer paper ply of a multi-ply sack further comprising an inner paper ply and plastic film arranged between the inner paper ply and the outer paper ply.

The outside of the outer paper ply of such a sack is exposed to the surroundings, which means that the outside of the outer paper ply can be exposed to rain.

The inventor has realized that the object of providing a sack that can protect a water-sensitive content, such as a hydraulic binder, against rain and still meet other requirements of the sack industry (e.g. strength to prevent rupture during handling, deaeration during filling to allow high filling rates and cost efficiency) can be met by a sack having a hydrophobic outer paper ply, a highly porous inner paper ply and an plastic film arranged between the inner paper ply and the outer paper ply. The water absorptiveness of such an outer paper ply is reduced. Accordingly, it may contribute to the strength of the sack also after it has been exposed to rain. Further, such a hydrophobic outer paper ply better preserves the visual impression of the sack, such as the quality of a print on the sack, under wet conditions than a normal sack paper ply. However, water may still penetrate the hydrophobic outer paper ply during heavy rains. Therefore, the plastic film of the sack is made of a material that is substantially impermeable for water and moisture, such as HDPE. Such films are often referred to "free films" in the field. The traditional free film is often slitted or perforated to allow air to pass through it during filling and thereby enable sufficiently high filling rates. In contrast, the plastic film of the sack is not slitted or perforated to any substantial degree and thus substantially impermeable not only to water and moisture, but also to air. To meet the deaeration requirement, the sack is instead configured to allow air to escape through the inner porous paper ply to an interspace between the inner paper ply and the plastic film and then from the interspace through a top end of the sack. The "top deaeration" may for example be achieved by not sealing a portion of the top end.

Because the plastic film is not perforated or slitted, it better protects the inner paper ply and the sack contents from water and moisture than the typical traditional free film. A consequence of the non-permeability of the plastic film of the sack is that it is not necessary that the inner paper ply exhibits any wet strength, which allows for a selection of a commercially available inner paper ply. The absence of slits and perforation further results in that the plastic film of the sack can make a substantial contribution to the overall strength of the sack.

To allow for sufficient deaeration, the Gurley porosity according to ISO 5636-5 of the inner paper ply of the sack is less than 10 s. Preferably, it is less than 8 s and more preferably less than 6 s. Brown QuickFill Plus and Brown QuickFill SE, which are marketed by BillerudKorsnäs and have Gurley porosities of 3 s and 5 s, respectively, are examples of sack papers that can be used for the inner paper ply. Normally, it is pointless to reduce the Gurley value below 2.5 s. Further, it is generally difficult to produce a sack paper of such a low Gurley value and sufficient strength. Ranges for the Gurley porosity of the inner paper ply are thus 2.5-10 s, 2.5-8 s and 2.5-6 s.

To provide strength, the inner paper ply of the sack is preferably a Kraft paper ply. For the same reason, the starting material used for preparing the pulp that is used for forming the paper of the inner paper ply can comprise softwood. Accordingly, the inner paper ply is preferably formed from a paper pulp comprising at least 50 % softwood pulp, preferably at least 75 % softwood pulp and more preferably at least 90 % softwood pulp. The percentages are based of the dry weight of the pulp.

As explained above, sack paper normally has a grammage according to ISO 536 of 50-140 g/m² and a sack paper of a higher grammage is stronger, but also more expensive. For the inner paper ply of the sack, the grammage is preferably 55-100 g/m² and more preferably 60-90 g/m².

The inner paper ply preferably provides substantial dry strength to the sack. Accordingly, the tensile energy absorption (TEA) according to ISO 1924-3 of the inner ply is preferably at least 175 J/m² in the machine direction (MD). In the cross direction (CD), the TEA according to ISO 1924-3 is preferably at least 182 J/m².

More preferably, the TEA according to ISO 1924-3 is at least 196 J/m² in the MD and/or at least 203 J/m² in the CD.

A typical upper limit for the TEA may be 260 J/m² in MD and 270 J/m² in CD.

To take the TEA in both MD and CD into account, a geometric TEA may be calculated as the square root of the product TEA in MD and TEA in CD (TEA (geometric) = √(TEA (MD) * TEA (CD))).

Accordingly, the geometric TEA according to ISO 1924-3 of the inner ply is preferably at least 178 J/m², such as 178-265 J/m², and more preferably 199-265 J/m².

To reduce the fibre consumption, the inner paper ply is advantageously strong already at a relatively low grammage. Therefore, the TEA index according to ISO 1924-3 of the inner ply may be at least 2.5 J/g in the MD and at least 2.6 J/g in the CD. Preferably, the TEA index according to ISO 1924-3 of the inner ply is at least 2.8 J/g, such as 2.8-3.5 J/g in the MD and at least 2.9 J/g, such as 2.9-3.9 J/g in the CD.

The plastic film of the sack provides a substantially uninterrupted barrier between the inner paper ply and the outer paper ply. Such a film is not perforated or slitted to any substantial degree. The barrier is a barrier for liquid water, moisture and air.

How to arrange a plastic film between two plies in a sack is well known to the skilled person.

The thickness of the plastic film may be 8-25 µm, such as 12-22 µm.

The water vapour transmission rate (WVTR) according to ISO 2528 (tropical conditions: T = 38 °C and RH = 90 %) of the plastic film is preferably below 1000 g/m²*24h, such as below 700 g/m²*24h.

A suitable material for the plastic film is polyethylene (PE), such as high-density polyethylene (HDPE). HDPE is normally defined as PE having a density of 0.93-0.97 g/cm³.

However, the plastic film may also be bio-based. A bio-based film for use in the sack may for example comprise polylactic acid (PLA). An example of a bio-based plastic film comprising PLA that has a WVTR (ISO 2528, tropical conditions: T = 38 °C and RH = 90 %) value of about 300 g/m²*24h has been developed by Novamort (Italy).

The sack is configured to allow air to escape from an interspace between the inner paper ply and the plastic film through a top end of the sack during filling of the sack.

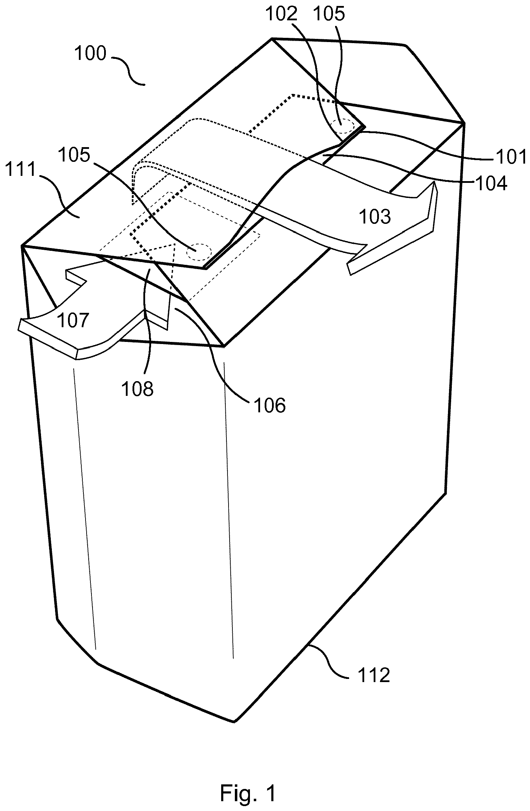

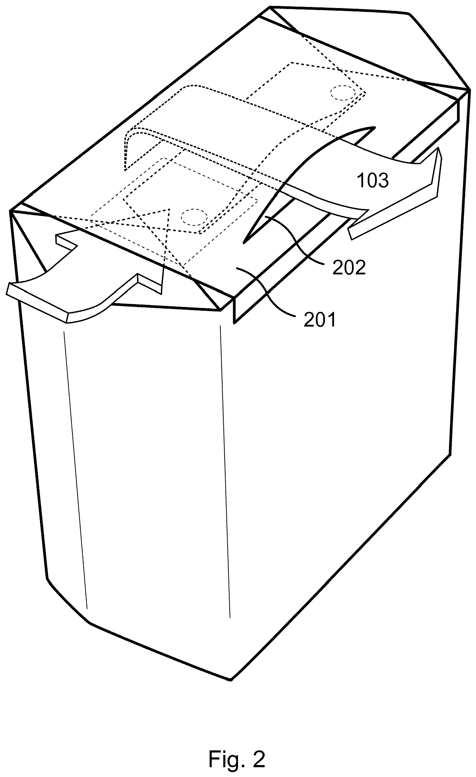

For example, a top end of the sack may be formed by folding and gluing the plies such that a portion of the top end is not sealed and air can escape from the interspace through the non-sealed portion during filling of the sack. Such an embodiment is further discussed below with reference to figures 1 and 2.

The sack is preferably a valve sack. Valve sacks are well known to the skilled person. A valve sack is provided with a valve through which it may be filled. Such a valve is normally provided at a folded top end of the sack. A typical valve is further discussed below with reference to figures 1 and 2.

Figure 1 illustrates a multi-ply sack 100 having a top end 111 and a bottom end 112. The sack comprises an inner paper ply 101, an outer paper ply 102 and a plastic film arranged between the inner paper ply and the outer paper ply (not shown). To improve rain resistance, the outer paper ply 102 is sized with at least one hydrophobic size. To facilitate deaeration, the Gurley porosity according to ISO 5636-5 of the inner paper ply 101 is less than 10 s. The plastic film provides a substantially uninterrupted barrier (not shown) between the inner paper ply 101 and the outer paper ply 102.

The sack 100 is configured to allow air to escape (the air escape is illustrated by the arrow 103) from an interspace between the inner paper ply 101 and the plastic film through the top end 111 of the sack 100 during filling of the sack 100. Such a deaeration is achieved by a non-sealed portion 104 forming an opening between the inner paper ply 101 and the outer paper ply 102 at the top end 111. The non-sealed portion 104 may be flanked by sealed portions 105, i.e. portions in which the outer paper ply 102 is sealed (preferably glued) to the inner paper ply 101. For a 25 kg sack 100 having a width of 400-420 mm, the width of the non-sealed portion may for example be 150-160 mm and for a 35 kg having a width of 440-460 mm, the width of the non-sealed portion may be 190-200 mm.

The top end 111 of the sack 100 of figure 1 further has a filling valve 106 into which a filling spout may be inserted. The arrow 107 illustrates how the filling spout is inserted into the valve 106. A ceiling of the valve 106 is reinforced by a valve reinforcement 108, which preferably is composed of paper. Because of the reinforcement provided by the valve reinforcement 108, the sack 100 can hang on the filling spout during filling without breaking. When fully opened, the opening of the valve 106 may be approximatively diamond-shaped.

Figure 2 illustrates the sack 100 of figure 1 onto which a top patch 201 has been applied. The top patch reinforces top end 111 of the sack 100. A slit 202 in the top patch 201 ensures that the air can escape through the non-sealed portion 104 during filling. The slit 202 is thus substantially aligned with the non-sealed portion 104. Further, the width of the slit 202 is preferably approximately the same as the width of the non-sealed portion 104. Again, the escape of air from the interspace between the inner paper ply 101 and the plastic film through the top end 111 of the sack 100 is illustrated by the arrow 103.

To best protect the contents against rain, the sack 100 is oriented such that the opening formed by the non-sealed portion 104 is facing down.

The dimensions of the sack may for example be such that it has a volume of 8-45 liters, preferably 12-45 liters in a filled configuration.

The sack may for example contain a hydraulic binder, such as cement. The amount of the hydraulic binder may for example be 17-60 kg. 25 kg sacks, 35 kg sacks and 50 kg sacks are demanded on the market and may thus be prepared according to the present disclosure. The dimensions of a filled 25 kg sack may for example be 400x450x110 mm. A "25 kg sack" typically can be filled with about 17.4 liters of material, while a "50 kg sack" is typically can be filled with about 35 liters of material.

### EXAMPLES

Bleached kraft papers having a grammage of 70 or 80 g/m² for an outer paper ply according to the present disclosure were prepared as follows.
Type of pulp: Bleached sulphate pulp from softwood
HC refining: 180 kWh/ton paper
LC refining: 100 kWh/ton paper
Pulp additive: 2.5 kg/ton paper of Fennosize G516/9M (a mixture of AKD and rosin size in a weight ratio of 1:3)
Pulp additive: 1.0 kg/ton paper of Raisamyl 50021, 1.0 kg/t (cationic starch)
Pulp additive: 15.0 kg/ton paper of Fennostrength UF 3467 (urea-formaldehyde wet strength agent)
Pulp additive: 0.42 kg/ton paper of Eka NP 247 (retention nano particle)
Pulp additive: 0.07 kg/ton paper of Eka PL 1510U (retention polymer)
Pulp additive: 0.5-2.5 kg/ton paper of Kemira ALG (alum) to obtain a headbox pH of 4.8-4.9

Wet creping was carried out to increase the stretchability in the MD.

The properties of the prepared bleached kraft papers (BKP70 and BKP80) and a reference paper are presented in table 1 below.

**Table 1.**

| | BKP80 Bleached | BKP70 Bleached | SplashBag* Unbleached (as tested) | SplashBag* Unbleached (as specified) |
|---|---|---|---|---|
| Grammage (g/m²) | 80 | 70 | 70 | 70 |
| TEA index MD/CD (J/g) | 2.8/3.6 | 2.7/3.2 | 3.1/3.7 | 3.1/3.4 |
| Stretchability MD/CD (%) | 6.0/9.2 | 7/8.7 | 6.1/8.4 | 5.8/8.0 |
| Tear strength MD/CD (mN) | 1200/ 1120 | 1050/ 1092 | 700/700 | 749/798 |
| Wet tensile strength MD (kN/m) | 1.74 | 1.24 | 1.97 | 1.8 |
| Cobb 60 s (g/m²) | 21 | 20 | N/A | 21 |
| Cobb 1800 s (g/m²) | 39 | 38 | 40 | N/A |
| Gurley (s) | 22 | 22 | N/A | N/A |
| Friction coefficient TS | N/A | 0.55 | N/A | N/A |

| | | | | |
|---|---|---|---|---|
| *"SplashBag" refers to the outer ply of a SplashBag marketed by Mondi. | | | | |

In table 1, it is seen that the Cobb 1800 s values of BKP70 and BKP80 are lower than the Cobb 1800 s value of the outer ply of the Mondi SplashBag even though BKP70 and BKP80 are bleached and Mondi SplashBag is unbleached. This is of significance as the Cobb 1800 s value reflects the rain resistance of the paper.

Two types of sacks were constructed.

### Sack 1

Outer paper ply: BKP70
Inner paper ply: QuickFill® Brown Plus (unbleached), marketed by BillerudKorsnäs AB (Sweden), see table 2
Free film: HDPE 12 µm (no perforations or slits)
Deaeration concept: top deaeration according to figure 2

### Sack 2

Outer paper ply: BKP70
Inner paper ply: QuickFill® Brown SE (unbleached), marketed by BillerudKorsnäs AB (Sweden), see table 2
Free film: HDPE 12 µm (no perforations or slits)
Deaeration concept: top deaeration according to figure 2

**Table 2. Both papers of table 2 are formed from unbleached sulphate/kraft pulp from softwood**

| | QuickFill Plus Unbleached | QuickFill SE Unbleached |
|---|---|---|
| Grammage (g/m²) | 70 | 70 |
| Gurley (s) | 3 | 5 |
| Tensile strength MD/CD (kN/m) | 5.6/4.9 | 5.6/4.9 |
| TEA MD/CD (J/m²) | 215/240 | 215/240 |
| TEA index MD/CD (J/g) | 3.1/3.4 | 3.1/3.4 |
| Stretch MD/CD (%) | 6.0/8.0 | 6.0/8.0 |

### Deaeration test

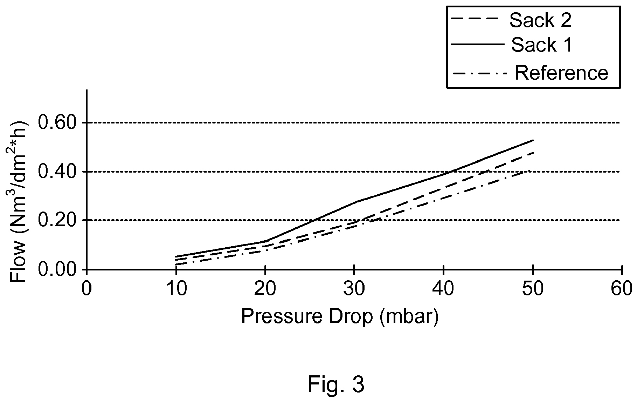

The normalised MegaGurley flow according to Haver&Boecker (L/02) vs. pressure drop was tested for three different 25 kg sacks; Sack 1, Sack 2 and a commercially available reference sack. Sack 1 and Sack 2 both showed better deaeration than the reference sack (see figure 3). Sack 1 showed the best deaeration.

### Drop test for dry sacks

10 sacks according to Sack 2 were filled with 24.9 kg cement each and tested in a drop test according to ISO 7965-1 (a constant drop height method, drop height = 1.2 m). The sacks were conditioned according to ISO 6599-1. The dimensions of each sack were 400 mm x 450 mm x 110 mm.

For each sack, the number of drops until failure was measured.

The result of the drop test was a mean number of drops of 9.2 for the 10 sacks according to Sack 2.

A mean number of drops for a comparable "normal" sack with a slitted or perforated free film is typically 4-5.

It can thus be concluded that the inventive sack lasted about twice as many drops.

### Rain test

Sacks according to Sack 2 were filled with about 25 kg of cement.

The filled sacks were exposed to rain conditions according to ISO 2875 for 2, 6 or 8 hours. During the exposures, the sacks were oriented with the deaeration opening facing down.

After the exposures, the sacks were cut open and the cement was visually inspected. According to the visual inspections, the condition of the cement was acceptable, also after 8 hours of exposure.

### Drop test after rain test

Sacks from the rain rest exposed to 2 hours of rain conditions were lifted and dropped several times from a height of 80 cm without breaking. Sacks from the rain rest exposed to 8 hours of rain conditions were lifted and dropped six to eight times from a height of 40 cm without breaking.

From this it is concluded that the sacks can be handled, e.g. at a construction site, also after 8 hours of exposure to rain.

## Claims

1. A bleached Kraft paper for use in a sack, wherein:
the grammage according to ISO 536 of said paper is 55-100 g/m², such as 60-90 g/m²;
the brightness according to ISO 2470-1 of said paper is at least 78 %, such as at least 83 %;
said paper comprises a urea formaldehyde wet strength agent;
said paper has been sized with AKD and rosin size in a weight ratio between 1:5 and 1:2;
the amount of hydrophobic size used for sizing the paper is 1.5-4 kg/ton paper, such as 2.0-3.5 kg/ton paper;
the Gurley porosity according to ISO 5636-5 of said paper is at least 18 s, such as at least 22 s;
the static friction coefficient according to Tappi T-815 of at least one side, such as both sides, of said paper is at least 0.5; and
the Cobb 1800 s value measured according to ISO 535 of at least one side of said paper is less than 50 g/m², such as less than 45 g/m², such as less than 40 g/m².

2. A sack comprising a ply composed of the bleached Kraft paper of claim 1.

## Patentansprüche

1. Gebleichtes Kraftpapier zur Verwendung in einem Sack, wobei:
das Flächengewicht nach ISO 536 des Papiers 55-100 g/m² beträgt, z. B. 60-90 g/m²;
die Helligkeit nach ISO 2470-1 des Papiers mindestens 78 % beträgt, z. B. mindestens 83 %;
das Papier ein Harnstoff-Formaldehyd-Nassfestmittel umfasst;
das Papier mit AKD und Kolophoniumleim in einem Gewichtsverhältnis zwischen 1:5 und 1:2 geleimt worden ist;
die Menge an hydrophobem Leim, die zum Leimen des Papiers verwendet wird, 1,5-4 kg/Tonne Papier beträgt, z. B. 2,0-3,5 kg/Tonne Papier;
die Gurley-Porosität nach ISO 5636-5 des Papiers mindestens 18 s beträgt, z. B. mindestens 22 s;
der statische Reibungskoeffizient nach Tappi T-815 von mindestens einer Seite, z. B. beiden Seiten, des Papiers mindestens 0,5 beträgt;
und der nach ISO 535 gemessene Cobb-1800-s-Wert von mindestens einer Seite des Papiers weniger als 50 g/m² beträgt, z. B. weniger als 45 g/m², z. B. weniger als 40 g/m².

2. Sack, umfassend eine Lage, die aus dem gebleichten Kraftpapier nach Anspruch 1 besteht.

## Revendications

1. Papier Kraft blanchi pour une utilisation dans un sac, dans lequel :
le grammage selon ISO 536 dudit papier est compris entre 55 et 100 g/m², tel qu'entre 60 et 90 g/m² ;
la blancheur selon ISO 2470-1 dudit papier est d'au moins 78 %, telle qu'au moins 83 % ;
ledit papier comprend un agent de force humide à base de formaldéhyde urée ;
ledit papier a été collé avec de l'AKD et de la colle résinique dans un rapport massique compris entre 1:5 et 1:2 ;
la quantité de colle hydrophobe utilisée pour coller le papier est comprise entre 1,5 et 4 kg/tonne de papier, telle qu'entre 2,0 et 3,5 kg/tonne de papier ;
la porosité de Gurley selon ISO 5636-5 dudit papier est d'au moins 18 s, telle qu'au moins 22 s ;
le coefficient de frottement statique selon Tappi T-815 d'au moins un côté, tel que les deux côtés, dudit papier est d'au moins 0,5 ; et
la valeur de Cobb 1800 s mesurée selon ISO 535 de l'au moins un côté dudit papier est inférieure à 50 g/m², tel qu'inférieure à 45 g/m², telle qu'inférieure à 40 g/m².

2. Sac comprenant une couche composée du papier Kraft blanchi selon la revendication 1.
